**Europäisches Patentamt**

**European Patent Office**

**Office européen des brevets**

(19)

(11) Veröffentlichungsnummer: **0 199 714**
**B1**

(12)

# EUROPÄISCHE PATENTSCHRIFT

(45) Veröffentlichungstag der Patentschrift:
04.10.89

(21) Anmeldenummer: **86890107.5**

(22) Anmeldetag: **17.04.86**

(51) Int. Cl.⁴: **C21C 5/52, C21C 7/00**

(54) **Verfahren zur Herstellung von Stahl aus Eisenschwamm sowie Anlage zur Durchführung des Verfahrens.**

(30) Priorität: **26.04.85 AT 1257/85**

(43) Veröffentlichungstag der Anmeldung:
**29.10.86 Patentblatt 86/44**

(45) Bekanntmachung des Hinweises auf die Patenterteilung:
**04.10.89 Patentblatt 89/40**

(84) Benannte Vertragsstaaten:
**BE DE FR GB IT LU SE**

(56) Entgegenhaltungen:
**BE-A- 858 967**
**DE-A- 2 841 697**
**DE-A- 2 910 169**
**DE-A- 3 245 098**
**DE-B- 2 710 377**
**US-A- 2 305 052**

(73) Patentinhaber: **VOEST-ALPINE INDUSTRIEANLAGENBAU GESELLSCHAFT M.B.H.,**
**Turmstrasse 44, A-4020 Linz(AT)**

(72) Erfinder: **Berger, Harald, Dipl.-Ing. Dr.,**
**Mariahilfgasse 11, A-4020 Linz(AT)**
Erfinder: **Pirker, Hermann, Dipl.-Ing., Pregistrasse 27,**
**A-4020 Linz(AT)**

(74) Vertreter: **Wolfram, Gustav, Dipl.-Ing.,**
**Schwindgasse 7 P.O. Box 205, A-1041 Wien(AT)**

## Beschreibung

Die Erfindung betrifft ein Verfahren zur Herstellung von Stahl aus Eisenschwamm mit einem Phosphorgehalt von mehr als 0,3 %, mit einem Gehalt an saurer Gangart entsprechend einem $SiO_2$-Gehalt von mehr als 5 % und einem $Al_2O_3$-Gehalt von mehr als 3 % sowie mit einem Gehalt an basischer Gangart entsprechend einem CaO+MgO-Gehalt von weniger als 5 %, gegebenenfalls unter Zusatz von Eisenschrott bis zu einer Menge von 30 % des Eisenschwammeinsatzes, sowie eine Anlage zur Durchführung des Verfahrens.

Ein mittels Direktreduktionsverfahren erzeugter Eisenschwamm hat üblicherweise einen Kohlenstoffgehalt von 0,20 bis 2,40 %, einen Schwefelgehalt von 0,01 bis 0,03 % und einen Phosphorgehalt von 0,007 bis 0,05 %, weiters einen Gehalt an saurer Gangart entsprechend einem $SiO_2$-Gehalt von 2 bis 4 % und einem $Al_2O_3$-Gehalt von 0,60 bis 2,70 %, sowie einen Anteil an basischer Gangart entsprechend einem CaO+MgO-Gehalt von 0,20 bis 3 %. Den Rest bilden im wesentlichen Eisen und Eisenoxide.

Eisenschwamm dieser Zusammensetzung wird normalerweise in basisch ausgekleideten Schmelzgefäßen unter Zusatz von basischen Schlackenbildnern geschmolzen, wobei der Phosphor zum größten Teil von der Schlacke aufgenommen wird, die Gangart-Bestandteile sich in der Schlacke befinden und die erhaltene Metallschmelze unmittelbar zu Stahl aufgearbeitet werden kann.

Es gibt jedoch Eisenerze, die einen viel höheren Anteil an phosphorhältigen Mineralien, wie z.B. Apatit, enthalten. In einem aus solchen Erzen nach einem Direktreduktionsverfahren erhaltenen Eisenschwamm finden sich Phosphorgehalte von mehr als 0,3 % bis 1,2 %, Gehalte an $SiO_2$ von mehr als 5%, sogar bis zu 7 oder 8%, und $Al_2O_3$-Gehalte von mehr als 3% bis etwa 6 %, wobei der Anteil an basischer Gangart — charakterisiert durch CaO+MgO — geringer als 5% oder sogar 4% ist.

Es war bisher nicht möglich bzw. extrem unwirtschaftlich, aus einem Eisenschwamm von solcher Zusammensetzung einen brauchbaren Stahl zu erzeugen, weil zur Entfernung des Phosphors beim Schmelzen in basisch ausgekleideten Gefäßen unvertretbar große Mengen an basischen Entphosphorungsmitteln eingesetzt werden müssen. Das Schmelzen dieser Entphosphorungsmittel bedingt hohen Energieaufwand. Ebenso ist die Chargenzeit zu lang, die anfallende Schlackenmenge zu groß und die Eisenausbringung zu gering. Die Entfernung phosphorhaltiger Erzbegleiter sowie saurer Gangart schon vor der Direktreduktion des Erzes gelingt überhaupt nur bei wenigen Erzarten, beispielsweise magnetischen Erzen, jedoch ist der mit der Aufbereitung durch Mahlen der Erze und anschließendes Abtrennen der unerwünschten Erzteile verbundene Aufwand in jedem Fall außerordentlich hoch.

Im weiteren ist in der DE-A 2 841 697 ein mit zwei Elektroöfen arbeitendes Verfahren zur Stahlherstellung aus Eisenschwamm mit einem hohen Anteil saurer Gangart beschrieben, bei dem die Feuerfestauskleidung des zuerst eingesetzten Ofens der sauren Gangart angepaßt und die darin erzeugte Schmelze schlackenfrei in eine vorgewärmte Pfanne abgestochen und in dieser dem zweiten Elektroofen zur Weiterbehandlung zugeführt wird.

Die Erfindung bezweckt die Vermeidung dieser Nachteile und stellt sich die Aufgabe, ein wirtschaftliches und betriebssicheres Verfahren zur Herstellung von Stahl aus den genannten, bisher nicht verarbeitbaren Ausgangsmaterialien zu schaffen. Eisenschwamm dieser ungewöhnlichen Zusammensetzung wird z.B. aus in großen Mengen vorhandenen, teilweise noch nicht erschlossenen, Erzvorkommen im nordafrikanischen Raum erhalten, und es besteht das Bestreben, diese Lagerstätten industriell zu nutzen.

Das erfindungsgemäße Verfahren, mit dem diese Aufgabe gelöst wird, besteht darin, daß

— der Eisenschwammeinsatz, gegebenenfalls zusammen mit dem Schrott, in einem Elektroofen mit saurer Zustellung geschmolzen wird,

— die Stahlschmelze schlackenfrei in eine basisch ausgekleidete Pfanne abgestochen wird, wobei in den Abstichgießstrahl ein teilchenförmiges Entphosphorungsmittel eingebracht wird,

— die entstandene phosphorhaltige Schlacke von der Pfanne abgeschlackt und die Pfanne sodann in einen Pfannenheizstand gebracht wird, wo der Pfanneninhalt nötigenfalls bis auf die gewünschte Entphosphorungstemperatur von etwa 1550 bis 1600°C aufgeheizt und außerdem weiteres Entphosphorungsmittel zusammen mit Sauerstoff oder sauerstoffhaltigem Gas in die Schmelze eingeblasen wird, welche Behandlung gegebenenfalls nach Abziehen der gebildeten Schlacke wiederholt wird, und

— nach erfolgter Entphosphorung durch Zugabe von Legierungskomponenten, wie Ferromangan, von Beruhigungsmitteln, wie Silicium und Aluminium, sowie nötigenfalls Entschwefelungsmitteln, wie Calcium, die gewünschte Stahlzusammensetzung eingestellt wird.

Auf diese Weise kann der Energie- und Rohstoffbedarf für die Stahlherstellung aus sauren, hochphosphor- und gangarthaltigen Eisenschwämmen vergleichsweise sehr niedrig gehalten werden.

Zweckmäßig wird gemeinsam mit dem Eisenschwamm und gegebenenfalls dem Schrott Quarz zugegeben.

Dabei können Eisenschwamm und Quarzsand beispielsweise über Förderbänder während des Schmelzprozesses laufend in den Elektroofen chargiert werden. Der $SiO_2$-Gehalt der im Elektroofen gebildeten Schlacke kann günstigerweise über 50% liegen und die Temperatur der Schmelze soll zwecks Vermeidung unerwünschter Reaktionen während des Schmelzvorganges relativ niedrig (um 1550°C) gehalten werden.

Gemäß einer Ausführungsform des erfindungsgemäßen Verfahrens wird nach dem Schmelzen des Eisenschwamm/Schrott-Einsatzes in einem Elektrolichtbogenofen durch Einblasen von Sauerstoff in die Schmelze gefrischt.

Das Frischen erfolgt, falls notwendig, gemäß der C/FeO-Bilanz auf einen mittleren C-Gehalt.

Vor dem Abstich in die Pfanne hat es sich als vorteilhaft erwiesen, die Temperatur der Schmelze auf etwa 90°C über die Liquidus-Temperatur zu erhöhen, um den mit dem Abstich und der Entphosphorung verbundenen Wärmeverlust auszugleichen.

Ein Teil der im Elektroofen gebildeten sauren Schlacke kann jeweils beim Erschmelzen der nächsten Charge im Ofen belassen werden.

Vorzugsweise wird die in die Pfanne abgegossene Stahlschmelze mit von unten in die Pfanne eingeblasenem Argon gespült bzw. gerührt. Das Einblasen von Argon oder auch eines anderen Edelgases erfolgt dabei während des Abstiches und nach dem Abstich, um die Aufnahmekapazität der gebildeten Schlacke für Phosphor möglichst vollständig auszunützen.

Nach einer vorteilhaften Ausführungsform werden zusätzlich zu dem in den Gießstrahl eingebrachten teilchenförmigen Entphosphorungsmittel weiteres Entphosphorungsmittel und/oder Schlackenbildner in die Pfanne zugesetzt. Diese Substanzen können bereits vor dem Abstich in die Pfanne oder auf die Stahlschmelze gestreut werden.

Nach einer weiteren bevorzugten Ausführungsform wird die Pfanne im Pfannenheizstand mit von unten her durch die Schmelze geblasenem Argon gespült. Statt Argon kann auch in diesem Fall ein anderes Edelgas eingesetzt werden.

Zweckmäßig werden in die Pfanne im Pfannenheizstand zusätzlich zu dem mit Sauerstoff oder sauerstoffhaltigem Gas eingeblasenem Entphosphorungsmittel weitere Schlackenbildner zur Bildung einer die Metallbadoberfläche abdeckenden Topschlacke aufgegeben.

Als Entphosphorungsmittel und/oder Schlackenbildner wird insbesondere eine hauptsächlich ein $CaO-CaCO_3$-Gemisch, weiters $CaF_2$ und Eisenoxide enthaltende Mischung eingesetzt.

Die erfindungsgemäße Anlage umfaßt einen sauer ausgekleideten Elektroofen mit Gießschnauze zur Bildung eines Gießstrahles, sowie eine Zuführungseinrichtung für Entphosphorungsmittel zum Gießstrahl, eine basisch ausgekleidete Pfanne und einen Pfannenheizstand mit einer Zuführungseinrichtung für weiteres Entphosphorungsmittel, wobei die Pfanne zwischen einer ersten Entphosphorungsstation im Gießstrahlbereich und der weiteren Entphosphorungsstation des Pfannenheizstandes bewegbar ist.

Zweckmäßig sind sowohl die erste Entphosphorungsstation als auch der Pfannenheizstand mit Zuführungseinrichtungen für Entphosphorungsmittel und für in die Pfanne einzublasendes Spülgas versehen.

Weiters ist zweckmäßig zwischen der ersten Entphosphorungsstation und dem Pfannenheizstand eine Abschlackposition vorgesehen.

Das Verhältnis des oberen Durchmessers der Pfanne zu deren Höhe beträgt vorteilhaft mehr als 0,8.

Die Erfindung ist in der beiliegenden Schemazeichnung näher erläutert.

Mit 1 ist allgemein ein sauer zugestellter, kippbarer Elektrolichtbogenofen bezeichnet, der drei Elektroden 2, 2', 2" aufweist. Der Elektroofen ist mit einer Chargieröffnung 3 zum Einbringen von Eisenschwamm und Quarzsand sowie mit einer zweckmäßig durch die Ofentür geführten Sauerstofflanze 4 ausgestattet. Im Bodenbereich des Ofens ist eine Gießschnauze bzw. Gießrinne 5 vorgesehen.

Unterhalb der Gießschnauze 5 ist eine erste Entphosphorungsstation 6 vorgesehen, in der eine basisch ausgekleidete Pfanne 7 auf einem Wagen 8 stationiert ist. Die Pfanne ist überquadratisch dimensioniert, d.h. ihr oberer Durchmesser ist größer als ihre Höhe. Weiters ist die erste Entphosphorungsstation mit einer Zuführungsleitung 9 für Argon und mit einer Rutsche 10 zum Einbringen von Entphosphorungsmittel in den strichliert dargestellten Gießstrahl versehen. Die Abstichstellung des Elektrolichtbogenofens 1 ist gleichfalls strichliert eingezeichnet. Die Zuführungsleitung 9 ist in der gezeigten Ausführungsform an einen Spülstein im Boden der Pfanne 7 anschließbar.

Weiters umfaßt die Anlage einen Pfannenheizstand 11, zu dem die Pfanne 7 mittels des Wagens 8 verfahrbar ist. Im Pfannenheizstand 11 ist ein die Pfanne 7 verschließender Deckel 12 heb- und senkbar bzw. schwenkbar angeordnet, wobei der Deckel 12 eine Öffnung 13 zum Einbringen einer Lanze 14 aufweist. Diese Lanze ist mit nicht dargestellten Zuführungen für Entphosphorungsmittel und Sauerstoff oder sauerstoffhältiges Gas, beispielsweise Luft, verbunden. Eine gleichfalls im Deckel 12 angeordnete Öffnung zum Aufgeben weiterer Schlackenbildner ist mit 15 bezeichnet. Entstehende Gase können durch eine Gasableitung 16 entfernt werden. Weiters enthält der Pfannenheizstand zur eventuellen Beheizung des Pfanneninhaltes heb- und senkbare bzw. schwenkbare Elektroden 17, 17', 17" sowie zur Spülung des Pfanneninhaltes eine Zuführungsleitung 18 für Argon.

Zwischen der ersten Entphosphorungsstation 6 und dem Pfannenheizstand 11 ist eine Abschlackposition 19 vorgesehen, wo die in der ersten Entphosphorungsstation 6 und während des Verweilens im Pfannenheizstand 11 gebildete phosphorhältige Schlacke von der Pfanne 7 abgezogen wird und mittels eines Schlackenkübels 20 abtransportierbar ist. Die Anlage kann noch mit weiteren - nicht dargestellten - Einrichtungen zur Abführung der während des Verfahrens entstehenden Rauchgase bzw. Abgase versehen sein. So ist es z.B. möglich, den Elektroofen 1 gemeinsam mit der ersten Entphosphorungsstation 6 in einem Gehäuse einzuschließen und die Gase aus diesem Gehäuse abzusaugen.

Das nachfolgende Beispiel dient zur noch detaillierteren Illustration der Erfindung.

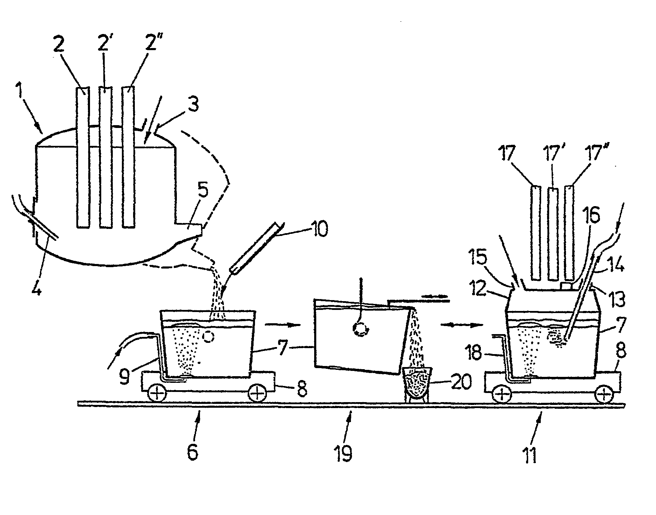

Beispiel:
144 t Eisenschwamm mit folgender Zusammensetzung:
78,0% Gesamt-Fe, 70,0 % $Fe_{met}$ (Metallisierungsgrad: 90 %), 1,50 % C, 0,020 % S, 1,10 % P, 7,50 % $SiO_2$, 5,20 % $Al_2O_3$, 4,90 % CaO+MgO und Spuren von Cu, Ni, Cr, Mo, Sn werden mit 33,5 t Rücklaufschrott und 11 t Quarzsand in einem 140 t Lichtbogenofen, wie in der Zeichnung dargestellt, eingesetzt und bei niedrigem cos φ von

etwa 0,7 bis zum Erreichen einer Schmelzbadtemperatur von 1550°C aufgeschmolzen, wobei durch eingeblasenen Sauerstoff gefrischt wird.

Die Metallschmelze wird schlackenfrei nach einer kurzen Aufwärmphase, wobei die Temperatur auf 1640°C steigt, durch Kippen des Ofens in die Pfanne 7, die sich in der ersten Entphosphorungsstation 6 befindet, abgegossen und während des Abstiches wird in den Gießstrahl ein Entphosphorungsmittel, bestehend aus 57 % CaO/CaCO₃, 18 % CaF₂ und 25 % FeₓOᵧ, eingebracht, u.zw. in einer Menge von 20 kg/t Stahlschmelze. Gleichzeitig wird durch den Boden der Pfanne 7 Argon eingeblasen, um eine heftige Rührwirkung zu erzeugen.

Die aus der Gießschnauze 5 des Ofens 1 ausfließende Stahlschmelze hat einen Phosphorgehalt von etwa 0,8 bis 0,9 %, die nach der ersten Entphosphorung in der Pfanne 7 verbleibende Metallschmelze einen solchen von etwa 0,4 bis 0,5 %. Die Temperatur der Schmelze beträgt dann etwa 1570°C.

Daraufhin wird die Pfanne 7 von der ersten Entphosphorungsstation 6 in die Abschlackposition 19 gebracht, bis zum Überlauf der Schlacke gekippt und die Schlacke abgezogen. Die Temperatur der Schmelze beträgt jetzt etwa 1560°C.

Nach dem Abschlacken wird die in der Pfanne 7 befindliche Metallschmelze in den Pfannenheizstand 11 gebracht, auf etwa 1600°C aufgeheizt und einer zweiten bzw. mehreren weiteren Entphosphorungsstufen unterworfen. Bei diesen weiteren Entphosphorungsstufen werden durch die Lanze 14 20 kg des bereits erwähnten teilchen- bzw. pulverförmigen Entphosphorungsmittels pro t Schmelze mit Hilfe von Sauerstoff oder sauerstoffhältigem Gas eingeblasen. Gleichzeitig werden durch die Aufgabeöffnung 15 weitere Schlackenbildner von gleicher Zusammensetzung wie das Entphosphorungsmittel in einer Menge von 30 kg/t Schmelze eingebracht.

Nach Durchführung jeder weiteren Entphosphorungsstufe wird die Pfanne 7 in die Abschlackposition 19 gebracht, die Schlacke entfernt und die Pfanne zurück in den Pfannenheizstand 11 geführt, wo noch eine Desoxidations- und/oder Entschwefelungsbehandlung sowie die Zugabe von Legierungskomponenten, wie Ferromangan und/oder Ferrosilicium, vorgenommen wird, um die gewünschte Stahlanalyse zu errei chen. Es wurden 140 t Stahlschmelze von folgender Zusammensetzung erhalten:

0,04 % Phosphor
0,3 % Silicium
0,2 % Kohlenstoff
0,7 % Mangan
Rest Eisen und erschmelzungsbedingte Verunreinigungen.

## Patentansprüche

1. Verfahren zur Herstellung von Stahl aus Eisenschwamm mit einem Phosphorgehalt von mehr als 0,3%, mit einem Gehalt an saurer Gangart entsprechend einem SiO₂-Gehalt von mehr als 5% und einem Al₂O₃-Gehalt von mehr als 3% sowie mit einem Gehalt an basischer Gangart entsprechend einem CaO + MgO-Gehalt von weniger als 5%, gegebenenfalls unter Zusatz von Eisenschrott bis zu einer Menge von 30% des Eisenschwammeinsatzes, wobei

– der Eisenschwammeinsatz, gegebenenfalls zusammen mit dem Schrott, in einem Elektroofen mit saurer Zustellung geschmolzen wird,
– die Stahlschmelze schlackenfrei in eine basisch ausgekleidete Pfanne abgestochen wird, wobei in den Abstichgießstrahl ein teilchenförmiges Entphosphorungsmittel eingebracht wird,
– die entstandene phosphorhaltige Schlacke von der Pfanne abgeschlackt und die Pfanne sodann in einen Pfannenheizstand gebracht wird, wo der Pfanneninhalt nötigenfalls bis auf die gewünschte Entphosphorungstemperatur von etwa 1550 bis 1600°C aufgeheizt und außerdem weiteres Entphosphorungsmittel zusammen mit Sauerstoff oder sauerstoffhaltigem Gas in die Schmelze eingeblasen wird, welche Behandlung gegebenenfalls nach Abziehen der gebildeten Schlacke wiederholt wird, und
– nach erfolgter Entphosphorung durch Zugabe von Legierungskomponenten, wie Ferromangan, von Beruhigungsmitteln, wie Silicium und Aluminium, sowie nötigenfalls Entschwefelungsmitteln, wie Calcium, die gewünschte Stahlzusammensetzung eingestellt wird.

2. Verfahren nach Anspruch 1, dadurch gekennzeichnet, daß gemeinsam mit dem Eisenschwamm und gegebenenfalls dem Schrott Quarz zugegeben wird.

3. Verfahren nach den Ansprüchen 1 und 2, dadurch gekennzeichnet, daß nach dem Schmelzen des Eisenschwamm/Schrott-Einsatzes in einem Elektrolichtbogenofen durch Einblasen von Sauerstoff in die Schmelze gefrischt wird.

4. Verfahren nach einem der Ansprüche 1 bis 3, dadurch gekennzeichnet, daß die in die Pfanne abgegossene Stahlschmelze mit von unten in die Pfanne eingeblasenem Argon gespült bzw. gerührt wird.

5. Verfahren nach einem oder mehreren der Ansprüche 1 bis 4, dadurch gekennzeichnet, daß zusätzlich zu dem in den Gießstrahl eingebrachten teilchenförmigen Entphosphorungsmittel weiteres Entphosphorungsmittel und/oder Schlackenbildner in die Pfanne zugesetzt werden.

6. Verfahren nach einem oder mehreren der Ansprüche 1 bis 5, dadurch gekennzeichnet, daß die Pfanne im Pfannenheizstand mit von unten her durch die Schmelze geblasenem Argon gespült wird.

7. Verfahren nach einem oder mehreren der Ansprüche 1 bis 6, dadurch gekennzeichnet, daß in die Pfanne im Pfannenheizstand zusätzlich zu dem mit Sauerstoff oder sauerstoffhaltigem Gas eingeblasenem Entphosphorungsmittel weitere Schlackenbildner zur Bildung einer die Metallbadoberfläche abdeckenden Topschlacke aufgegeben werden.

8. Verfahren nach einem oder mehreren der Ansprüche 1 bis 7, dadurch gekennzeichnet, daß als Entphosphorungsmittel und/oder Schlackenbildner eine hauptsächlich ein CaO-CaCO₃-Gemisch, weiters CaF₂ und Eisenoxide enthaltende Mischung eingesetzt wird.

9. Anlage zur Durchführung des Verfahrens nach den Ansprüchen , bis 8 mit einem sauer ausgekleideten Elektroofen (1) mit Gießschnauze (5) zur Bildung eines Gießstrahles, sowie mit einer Zuführungseinrichtung (10) für Entphosphorungsmittel zum Gießstrahl, einer basisch ausgekleideten Pfanne (7) und einem Pfannenheizstand (11) mit einer Zuführungseinrichtung (14, 15) für weiteres Entphosphorungsmittel, wobei die Pfanne (7) zwischen einer ersten Entphosphorungsstation (6) im Gießstrahlbereich und der weiteren Entphosphorungsstation des Pfannenheizstandes (11) bewegbar ist.

10. Anlage nach Anspruch 9, dadurch gekennzeichnet, daß sowohl die erste Entphosphorungsstation (6) als auch der Pfannenheizstand (11) mit Zuführungseinrichtungen für (10, 14, 15) Entphosphorungsmittel und für (9, 18) in die Pfanne (7) einzublasendes Spülgas versehen sind.

11. Anlage nach Anspruch 9 oder 10, dadurch gekennzeichnet, daß zwischen der ersten Entphosphorungsstation (6) und dem Pfannenheizstand (11) eine Abschlackposition (19) vorgesehen ist.

12. Anlage nach einem oder mehreren der Ansprüche 9 bis 11, dadurch gekennzeichnet, daß das Verhältnis des oberen Durchmessers der Pfanne (7) zu deren Höhe mehr als 0,8 beträgt.

## Claims

1. Process for the production of steel from sponge iron having a phosphorus content of more than 0.3%, a content of acid gangue corresponding to an $SiO_2$ content of more than 5% and an $Al_2O_3$ content of more than 3%, as well as a content of basic gangue corresponding to a CaO + MgO content of less than 5%, if desired, upon the addition of iron scrap up to an amount of 30% of the sponge iron charge, wherein
   – the sponge iron charge, if desired, together with scrap, is melted in an acid-lined furnace,
   – the steel melt is tapped slag-free into a basic lined ladle, a particulate dephosphorising agent being introduced into the tap pouring jet,
   – the phosphorus-containing slag formed is removed from the ladle and subsequently the ladle is brought into a ladle heating stand, where the ladle content, if necessary, is heated to the desired dephosphorisation temperature of about 1,550 to 1600°C, and, moreover, further dephosphorising agent is blown into the melt together with oxygen or oxygen-containing gas, which treatment, if required, is repeated after withdrawal of the formed slag, and
   – after dephosphorisation has taken place, the desired steel composition is adjusted by adding alloying components, such as ferromanganese, killing agents, such as silicon and aluminium, as well as, if necessary, desulphurising agents, such as calcium.

2. Process according to claim 1, characterised in that quartz is added commonly with the sponge iron and, if desired, with the scrap.

3. Process according to claims 1 and 2, characterised in that after melting of the sponge iron/scrap charge in an electric arc furnace refing is effected by blowing oxygen into the melt.

4. Process according to one of claims 1 to 3, characterised in that the steel melt poured into the ladle is flushed or agitated by argon bottom-blown into the ladle.

5. Process according to one or several of claims 1 to 4, characterised in that, in addition to the particulate dephosphorising agent introduced into the pouring jet, further dephosphorising agent and/or slag formers are supplied into the ladle.

6. Process according to one or several of claims 1 to 5, characterised in that the ladle in the ladle heating stand is flushed with argon bottom-blown through the melt.

7. Process according to one or several of claims 1 to 6, characterised in that further slag formers are charged into the ladle in the ladle heating stand, in addition to the dephosphorising agent blown in with oxygen or oxygen-containing gas, in order to form a top slag covering the metal bath surface.

8. Process according to one or several of claims 1 to 7, characterised in that as the dephosphorising agent and/or slag former, a mixture primarily containing a $CaO$-$CaO_3$ mix, additionally $CaF_2$ and iron oxides is used.

9. Plant for carrying out the process according to claims 1 to 8, with an acid-lined electric furnace (1) with pouring spout (5) for the formation of a pouring jet as well as a feed means (10) for adding dephosphorising agent to the pouring jet, a basiclined ladle (7) and a ladle heating stand (11) with feed means (14, 15) for further dephosphorising agent, the ladle (7) being movable between a first dephosphorising station (6) in the pouring jet region and the additional dephosphorising station of the ladle heating stand (11).

10. Plant according to claim 9, characterised in that both the first dephosphorising station (6) and the ladle heating stand (11) are provided with feed means for (10, 14, 15) dephosphorising agent and for (9, 18) flush gas to be blown into the ladle (7).

11. Plant according to claim 9 or 10, characterised in that a slagging position (19) is provided between the first dephosphorising station (6) and the ladle heating stand (11).

12. Plant according to one or several of claims 9 to 11, characterised in that the ratio between the upper diameter of the ladle (7) and its height amounts to more than 0.8.

## Revendications

1. Procédé pour l'élaboration d'acier à partir d'éponge de fer ayant une teneur en phosphore de plus de 0,3%, une teneur en gangue acide correspondant à une teneur en $SiO_2$ de plus de 5% et une teneur en $Al_2O_3$ de plus de 3%, de même qu'une teneur en gangue basique correspondant à une teneur en CaO + MgO de moins de 5%, éventuellement sous addition de riblons de fer jusqu'à une quantité correspondant à 30% de l'éponge de fer chargée, selon lequel
   – on fait fondre l'éponge de fer chargée, éventuellement ensemble aves les riblons, dans un four électrique à revêtement acide,
   – on fait couler l'acier fondu, sans scories dans une poche à garnissage basique, en introduisant un agent de déphosphoration particulaire dans le jet de coulée,

– on enlève les scories phosphoreuses formées de la poche et on transfère la poche ensuite dans un poste de chauffage de poches, où le contenu de la poche est chauffé, si nécessaire, jusqu'à la température de déphosphoration désirée d'environ 1550 à 1600°C et où, en outre, de l'agent de déphosphoration supplémentaire est insufflé dans le métal fondu, ensemble avec de l'oxygène ou un gaz contenant de l'oxygène, et on répète au besoin ce traitement après le retrait des scories qui se sont formées, et

– lorsque la déphosphoration a été effectuée, on ajuste la composition désirée de l'acier par addition de composants d'alliage, tels que ferromanganèse, de calmants, tels que silicium et aluminium, ainsi que, si nécessaire, d'agents de désulfuration, tels que calcium.

2. Procédé selon la revendication 1, caractérisé en ce que l'on ajoute du quartz ensemble avec l'éponge de fer et, éventuellement, les riblons.

3. Procédé selon les revendications 1 et 2, caractérisé en ce que, après la fusion de l'éponge de fer et des riblons chargés, dans un four à arc, on opère un affinage par insufflation d'oxygène dans le métal fondu.

4. Procédé selon une des revendications 1 à 3, caractérisé en ce que l'on soumet l'acier fondu coulé dans la poche à un barbotage et une agitation par de l'argon insufflé d'en bas dans la poche.

5. Procédé selon une ou plusieurs des revendications 1 à 4, caractérisé en ce que, en plus se l'agent de déphosphoration particulaire introduit dans le jet de coulée, on ajoute de l'agent de déphosphoration supplémentaire et/ou des agents de scorification dans la poche.

6. Procédé selon une ou plusieurs des revendications 1 à 5, caractérisé en ce que l'on soumet le contenu de la poche à un barbotage, au poste de chauffage de poches, par de l'argon insufflé d'en bas à travers le métal fondu.

7. Procédé selon une ou plusieurs des revendications 1 à 6, caractérisé en ce que, en plus de l'argent de déphosphoration insufflé avec de l'oxygène ou un gaz contenant de l'oxygène dans la poche, au poste de chauffage de poches, on ajoute d'autres agents de scorification dans la poche en vue de la formation d'une scorie de tête recouvrant la surface du bain de métal.

8. Procédé selon une ou plusieurs des revendications 1 à 7, caractérisé en ce que l'on utilise, comme agent de déphosphoration et/ou agent de scorification, un mélange contenant principalement un mélange de $CaO-CaCO_3$ et, en plus, du $CaF_2$ et des oxydes de fer.

9. Installation pour la mise en œuvre du procédé selon les revendications 1 à 8, comprenant un four électrique (1) à garnissage acide et possédant un bec de coulée (5) pour la formation d'un jet de coulée, ainsi qu'un dispositif d'amenée (10) pour introduire un agent de déphosphoration dans le jet de coulée, une poche (7) à garnissage basique et un poste de chauffage de poches (11) avec un dispositif d'amenée (14, 15) pour ajouter de l'agent de déphosphoration supplémentaire, la poche (7) étant déplaçable entre une première station de déphosphoration (6) située au droit du jet de coulée et la station de déphosphoration supplémentaire du poste de chauffage de poches (11).

10. Installation selon la revendication 9, caractérisée en ce que la première station de déphosphoration (6) comme le poste de chauffage de poches (11) sont pourvus de dispositifs d'amenée (10, 14, 15) pour l'introduction d'agent de déphosphoration et de dispositifs d'amenée (9, 18) pour du gaz de barbotage à insuffler dans la poche (7).

11. Installation selon la revendication 9 ou 10, caractérisée en ce qu'une position de décrassage (19) est prévue entre la première station de déphosphoration (6) et le poste de chauffage de poches (11).

12. Installation selon une ou plusieurs des revendications 9 à 11, caractérisée en ce que le rapport du diamètre supérieur de la poche (7) à sa hauteur est supérieur à 0,8.